# DEMANDE DE BREVET EUROPEEN

(11) **EP 4 756 886 A1**
(43) Date de publication de la demande: **10.06.2026**
(21) Numéro de dépôt: 25220370.8
(22) Date de dépôt: 03.12.2025
(51) Int. Cl.: H01M 4/04, H01M 4/1391, H01M 4/505, H01M 4/525, H01M 4/62, H01M 4/88, H01M 10/0525, H01M 10/058, H01M 50/403, H01M 50/46, H01M 50/417

(54) **PROCÉDÉ DE PRÉPARATION D'UN ASSEMBLAGE ACTIF POUR ÉLECTRODE**

(30) Priorité: 03.12.2024 FR 2413363
(71) Demandeur: Commissariat à l'Énergie Atomique et aux Énergies Alternatives, 75015 Paris (FR)
(72) Inventeur: ABOUDRAR, Elias, 38054 GRENOBLE (FR); CHAZELLE, Sophie, 38054 GRENOBLE (FR); SOTTA, Dane, 38054 GRENOBLE (FR); GERSON, Lisa, 38054 GRENOBLE (FR)
(74) Mandataire: Ipsilon

(57) **Abrégé**

Le procédé comprend les étapes suivantes :
a) fourniture d'un mélange homogène (1) comprenant au moins un matériau électrochimiquement actif et une solution aqueuse, le mélange homogène (1) étant destiné, après séchage, à former une matière active poreuse poreux (7) pour électrode,
b) mise en forme du mélange homogène (1) par colaminage entre un collecteur de courant (4) et un film microporeux (5) de sorte à former un ensemble tricouche (6) comprenant le mélange homogène (1) laminé sous forme d'une bande, dont une première face est assemblée au collecteur de courant (4) et dont une seconde face opposée est assemblée au film microporeux (5), le colaminage réduisant en partie la quantité de solution aqueuse présente dans le mélange homogène (1),
c) séchage de l'ensemble tricouche (6) de sorte à évaporer la solution aqueuse résiduelle et obtenir assemblage actif (100) comprenant une bande (9) de matière active poreuse poreux (7) entre le collecteur de courant (4) et le film microporeux (5).

## Description

La présente invention se rapporte au domaine de la fabrication d'électrode pour des éléments électrochimiques. En particulier, l'invention concerne un procédé de préparation d'un assemblage actif comprenant une matière active poreuse pour électrode notamment utilisée dans les batteries métal-ion. Selon un second aspect, l'invention concerne un assemblage actif obtenu par ledit procédé.

Classiquement, les procédés de réalisation d'électrode par extrusion pour batterie métal-ions utilisent un solvant organique afin d'obtenir un mélange homogène des différents composants et qui soit suffisamment fluide afin de favoriser leur cheminement dans l'extrudeuse. Toutefois, le solvant le plus efficace et le plus utilisé dans ce contexte est la N-méthyl-2-pyrrolidone (ou NMP), qui est classifiée parmi les produits CMR (Cancérigène, Mutagène, Reprotoxique). De ce fait, la préparation par extrusion avec solvant nécessite non seulement une étape d'évaporation du solvant mais également un traitement spécifique des vapeurs du solvant toxique.

Une alternative à ce type d'extrusion consiste à réaliser une extrusion en absence de solvant. Le mélange homogène est obtenu en plaçant les polymères de la composition à leur température de fusion pour obtenir un mélange fondu et le mettre en forme. Ce procédé présente toutefois deux inconvénients majeurs dans le cadre de la préparation d'électrode. D'une part, lors de l'extrusion, les pressions à l'intérieur de l'extrudeuse et dans les filières sont élevées, impliquant une compression de la matière extrudée. La couche active récupérée présente ainsi une faible porosité, et donc une faible conductivité ionique après imprégnation par l'électrolyte, par rapport à des couches actives obtenues par un procédé d'extrusion avec solvant organique. D'autre part, la viscosité du mélange à extruder devant permettre de rester dans des gammes de pression et de couple pouvant être supportés par les équipements, une teneur en polymère fondu élevée par rapport à la teneur en matériau électrochimiquement actif est généralement sélectionnée pour permettre l'écoulement du mélange dans l'extrudeuse, ce qui nuit à la densité d'énergie.

En outre, ce procédé sans solvant nécessitant d'amener les polymères à leur température de fusion, une grande consommation d'énergie est nécessaire.

Une autre méthode connue de préparation de matière active pour électrode de batteries métal-ion consiste à réaliser une enduction par voie aqueuse utilisant des polymères hydrosolubles. Cependant, le procédé d'enduction nécessite un mélange de composants actifs très fluide, ce qui nécessite l'utilisation d'une grande quantité d'eau. Le temps de séchage de l'eau rallonge fortement le temps de cycle du procédé et les risques de générer des défauts dans la couche enduite une fois séchée sont majorés.

Selon encore une autre possibilité connue mais moins utilisée, il est possible de mettre en œuvre un procédé d'extrusion par voie aqueuse en utilisant des polymères hydrosolubles. Toutefois, des problèmes d'adhésion du mélange extrudé aux cylindres du laminoir empêche l'obtention d'une couche active homogène et de qualité.

Un des buts de la présente invention vise alors à pallier au moins l'un des inconvénients précités. A cet effet et selon un premier aspect, l'invention propose un procédé de préparation d'un assemblage actif pour électrode destinée à des éléments électrochimiques, en particulier des batteries métal-ions telles que des batteries à ions lithium ou ions sodium, le procédé comprenant les étapes suivantes :
a) fourniture d'un mélange homogène comprenant au moins un matériau électrochimiquement actif et une solution aqueuse, le mélange homogène étant destiné, après séchage, à former une matière active poreuse pour électrode,
b) mise en forme du mélange homogène par colaminage entre un collecteur de courant et un film microporeux de sorte à former un ensemble tricouche comprenant le mélange homogène laminé sous forme d'une bande, dont une première face est assemblée au collecteur de courant et dont une seconde face opposée est assemblée au film microporeux, le colaminage réduisant en partie la quantité de solution aqueuse présente dans le mélange homogène,
c) séchage de l'ensemble tricouche de sorte à évaporer la solution aqueuse résiduelle et obtenir un assemblage actif comprenant une bande de matière active poreuse entre le collecteur de courant et le film microporeux.

Ainsi, le procédé de préparation par voie aqueuse de l'invention évite l'utilisation de solvants organiques pouvant être toxiques, ce qui permet de s'affranchir des étapes de traitements des vapeurs. Ce procédé qui utilise moins de solvant (aqueux) que le procédé conventionnel permet également d'éviter l'apparition de défauts liés à l'évaporation du solvant organique, tels que l'apparition de craquelures, ainsi qu'une mauvaise adhésion sur le collecteur de courant. Il est ainsi possible de mettre en forme le mélange homogène sous forme d'une bande épaisse, de sorte à obtenir en fin de procédé une bande de matière active poreuse fortement grammée. Ce procédé permet notamment d'atteindre une épaisseur de matière active sans défaut au-delà de 500 micromètres, par exemple jusqu'à 1 mm, et un grammage d'électrode compris entre 5 et 50 mg/cm² voire jusqu'à 100 mg/cm² si nécessaire.

L'étape de colaminage est réalisée dans un laminoir conventionnel comportant deux cylindres et l'utilisation d'un film microporeux procure un effet anti-adhésion du mélange homogène humide sur les cylindres. En outre, le fait que ce film soit microporeux facilite l'élimination puis l'évaporation de la solution aqueuse aux étapes b) et c ) du procédé. Comme on le verra par la suite, l'évaporation est homogène sur la surface et l'épaisseur de la bande de mélange homogène.

Cette solution évite avantageusement le recouvrement des cylindres du laminoir par un film de protection pour empêcher l'adhésion, ou bien même d'utiliser des cylindres fabriqués dans un matériau antiadhésif, ce qui dans les faits est compliqué car ces solutions ne sont pas versatiles.

Par ailleurs, la présence de solution aqueuse résiduelle dans le mélange homogène après l'étape b) de colaminage permet par la suite d'obtenir une très bonne porosité dans la matière active pour électrode. Ceci facilite l'imprégnation ultérieure par l'électrolyte. De plus, la présence de la solution aqueuse résiduelle permet à la bande d'être malléable sinon la réduction d'épaisseur a lieu sans réduction du grammage et seule une réduction de la porosité obtenue. En effet, lors du colaminage la bande doit être malléable pour pouvoir attendre le grammage désiré. De plus, lorsque la matière est encore humide, elle n'est pas réellement poreuse. Il faut la sécher pour pourvoir créer de la porosité (le solvant libère sa place, laissant de la porosité).

Lors du colaminage de la matière humide selon l'étape b), la porosité ne peut pas être réduite puisque qu'il n'y a pas encore de porosité à proprement parler. La matière est donc étalée sur le collecteur de courant, réduisant son épaisseur (réduction de grammage). Or, si la matière était déjà poreuse (donc sèche) au moment du colaminage (compression de la matière entre les rouleaux), la porosité serait réduite sans que la matière s'étale sur le collecteur de courant.

La porosité de la matière active poreuse correspond au rapport du volume occupé par les pores de la bande de matière active poreuse sur le volume total de la bande de matière active poreuse.

Pour la calculer, la masse surfacique (mg/cm²) et l'épaisseur de l'électrode sont tout d'abord mesurées afin d'obtenir une densité réelle. Puis, le rapport entre la densité réelle et la densité théorique calculée à partir des densités de chacun des matériaux constitutifs permet d'obtenir la porosité de la matière active poreuse de la présente invention.

Selon une possibilité, l'étape b) de colaminage est réalisée par un laminoir comprenant deux cylindres dont l'un est couvert par le film microporeux et l'autre par le collecteur de courant et entre lesquels est introduit le mélange homogène. L'écartement entre les deux cylindres du laminoir est déterminé de sorte à mettre en forme le mélange homogène sous forme d'une bande d'une épaisseur souhaitée, notamment entre 50 et 500 micromètres

Selon une disposition, l'étape b) de colaminage comprend une étape de thermorégulation des deux cylindres du laminoir à une température Te supérieure à la température ambiante, ce qui participe à l'élimination par évaporation d'une partie de la solution aqueuse du mélange homogène. Cette étape est notamment utile si la matière est peu malléable lors du colaminage. Elle facilite l'écoulement de la matière entre les rouleaux et commence également à sécher la matière.

La température Te est inférieure à la température à laquelle les propriétés du film microporeux se dégradent. La température Te est notamment comprise entre 40 et 95°C, en particulier comprise entre 50 et 80°C et par exemple entre 55 et 70°C.Selon une possibilité, l'étape b) comprend une lamination du mélange homogène sur le collecteur de courant au préalable de l'utilisation du film microporeux.

L'étape c) de séchage de l'ensemble tricouche est réalisée dans des conditions permettant de préserver les propriétés mécaniques du film microporeux et l'homogénéité de matière active poreuse d'électrode. Notamment, l'étape c) de séchage de l'ensemble tricouche est réalisée à 60°C sous vide. L'étape c) permet d'évaporer la solution aqueuse résiduelle de l'étape b) et de révéler toute la porosité de la matière active poreuse.

Selon une disposition, le procédé comprend avant l'étape c) une étape b') d'enroulement de l'ensemble tricouche sur lui-même sous la forme d'une bobine.

Il est ainsi obtenu un assemblage actif sous forme d'une bobine, facile à sécher au moins majoritairement, voire totalement selon ses dimensions, puis à stocker et utiliser.

Selon les cas de figures, il peut rester quelque ppm d'eau dans l'ensemble tricouche. Toutefois, les électrodes étant usuellement découpées dans la bande par la suite et reséchées individuellement avant d'être assemblées pour créer la cellule électrochimique, cette eau résiduelle finit d'être évaporée à cette étape.

Par les termes 'assemblage actif' on entend dans le présent document un assemblage comprenant une bande d'une matière active poreuse pour électrode, laminée entre un collecteur de courant et un film microporeux.

Selon une disposition, le procédé comprend avant l'étape a) de fourniture du mélange homogène, la réalisation d'une étape i) d'extrusion par voie aqueuse de constituants comprenant au moins, ou étant constitués par, le matériau électrochimiquement actif, un conducteur électronique, un liant hydrosoluble et une solution aqueuse, de sorte à fournir le mélange homogène à l'étape a) en sortie d'extrudeuse.

Selon une possibilité, le matériau électrochimiquement actif est constitué d'un mélange de plusieurs matériaux électrochimiquement actifs pour électrode.

La composition du mélange homogène est adaptée au matériau(x) électrochimiquement actif(s) considérés, pour pouvoir réaliser une extrusion. Ceci concerne le choix du ou des polymères constituant le liant hydrosoluble, la proportion de solution aqueuse, etc...

Notamment la proportion de solution aqueuse de l'invention est déterminée afin d'être juste suffisante pour obtenir un mélange homogène pâteux, autrement dit un « mélange non liquide de plusieurs constituants », au contraire d'une encre ou d'une suspension liquide qui est configurée pour être utilisée dans un procédé d'enduction qui est de ce fait beaucoup plus fluide. En effet, le mélange homogène de l'invention ne s'écoule pas sur lui-même comme le ferait une encre utilisée dans un procédé d'enduction. Le mélange homogène de l'invention est trop pâteux pour être utilisé dans un procédé d'enduction. Ceci présente l'avantage de pouvoir produire des électrodes plus épaisses que par le procédé d'enduction dans lequel le mélange s'étale ou flue si une quantité trop importante de mélange est déposée. Avantageusement, l'étape i) d'extrusion est réalisée sans mise en œuvre d'additifs ou de solvants additionnels.

L'extrusion de l'étape (i) peut être réalisée à une température supérieure ou égale à la température ambiante, plus particulièrement à une température allant de 20°C à 60°C, et par exemple entre 20 et 30°C.

Selon une disposition, l'étape i) d'extrusion est réalisée par une extrudeuse comprenant un orifice de sortie apte à fournir le mélange homogène à l'étape a).

De manière générale, l'extrusion est réalisée avec une extrudeuse permettant le convoyage de la matière à extruder vers la sortie de l'extrudeuse, en particulier vers une sortie de l'extrudeuse munie d'une filière pour une première mise en forme du mélange mais qui limite la pression utilisable dans le procédé. En particulier, l'extrudeuse comporte au moins une zone de mélange et au moins une zone de convoyage. De préférence, l'extrudeuse mise en œuvre à l'étape (i) est une extrudeuse bivis corotative. La filière peut être une filière plate ou une filière jonc.

Les constituants du mélange peuvent être introduits dans l'extrudeuse individuellement ou sous la forme d'un prémélange.

Selon une possibilité, l'orifice de sortie est doté d'une filière plate configurée pour fournir le mélange homogène sous la forme d'une couche à l'étape a), en particulier d'épaisseur allant de 0,1 mm à 5 mm, notamment de 0,5 mm à 2 mm.

Selon une variante, l'orifice de sortie est doté d'une filière jonc configurée pour fournir le mélange homogène sous la forme d'un cordon à l'étape a).

Selon une autre variante, la filière jonc présente une sortie à laquelle est couplée un système de coupe configuré pour former des granules à partir du cordon de mélange homogène.

Selon une possibilité, le procédé comprend une étape supplémentaire ii) d'extrusion des granules de mélange homogène dans une seconde extrudeuse mono-vis suivie d'une étape complémentaire iii) de mise en forme du mélange homogène dans une filière plate pour fournir le mélange homogène sous la forme d'une couche à l'étape a).

Lorsque l'étape i) d'extrusion et l'étape b) de colaminage sont réalisées en continu, l'ensemble tricouche est obtenu sous la forme d'une bande continue.

Lorsque l'étape i) d'extrusion et l'étape b) de colaminage sont réalisées de façon discontinue l'ensemble tricouche comprenant la matière active poreuse d'électrode se présente sous la forme d'une feuille.

Selon une possibilité, le film microporeux comprend un taux de porosité compris entre 20 et 70%, notamment entre 30 et 60%. Ceci favorise l'élimination d'une partie de la solution aqueuse dès l'étape b) tout en laissant une quantité résiduelle permettant la création d'une porosité suffisante dans le matériau actif, par exemple entre 20 et 40%, qui permet d'obtenir une tortuosité assez basse pour permettre ensuite la diffusion des ions lithium présents dans l'électrolyte après séchage à l'étape c).

Selon une disposition, les pores du film microporeux présentent un diamètre moyen compris entre 0,020 micromètres et 0,070 micromètres, notamment entre 0,025 et 0,050 micromètres.

Il est envisagé que le film microporeux soit constitué par une membrane microporeuse destinée à séparer la cathode et l'anode de cellule dans les batteries, la membrane microporeuse étant perméable aux ions de l'électrolyte de la cellule.

Ladite membrane microporeuse est également bien connue sous la dénomination «séparateur» ou «séparateur à membrane» par l'homme du métier.

Selon une possibilité, le film microporeux comprend au moins une couche de polypropylène et/ou de polyéthylène.

Selon une variante, le film microporeux est constitué par une membrane tricouche de polypropylène et/ou de polyéthylène.

Selon une disposition, le film microporeux présente une épaisseur comprise entre 10 et 120 micromètres et par exemple une épaisseur comprise entre 10 et 50 micromètres de sorte à obtenir un compromis sur la capacité d'évaporation ou d'élimination de la solution aqueuse et sur la résistance mécanique du film microporeux.

Selon une possibilité, le film microporeux est choisi parmi les films disponibles dans le commerce et présentant les gammes de porosités et diamètres de pore souhaités telles qu'exposées ci-dessus. Ainsi, les valeurs de taux de porosité et de diamètre moyen des pores des films microporeux indiquées dans le présent document proviennent des spécifications fournies par les fabricants desdits films microporeux. Par exemple, le film microporeux est un séparateur Celgard ^{®} C2325, disponible auprès de la société Celgard^{®}, présentant une épaisseur comprise entre 15 et 40 micromètres. La porosité est comprise entre 25 et 50 %, elle est notamment de 39%. La taille des pores est comprise entre 0,020 micromètres et 0,035 micromètres, par exemple 0.028 micromètres.

Selon une possibilité, le liant hydrosoluble du mélange homogène est constitué d'un ou plusieurs polymères hydrosolubles présent(s) dans une proportion comprise entre 0,5% en poids et une valeur strictement inférieure à 10% en poids par rapport au poids total des constituants entrant dans la composition de la matière active poreuse d'électrode à l'état sec.

Selon une disposition, la proportion de solution aqueuse dans le mélange homogène de l'étape a) est comprise entre 3 % et 20% en poids par rapport au poids total du mélange homogène extrait sec, et par exemple entre 5 et 15% en poids.

Cette proportion de solution aqueuse est déterminée pour être suffisante pour solubiliser les polymères hydrosolubles dans le mélange, une mauvaise répartition de ceux-ci pourrait entrainer des problèmes d'adhésion et de performances électrochimiques. Cette proportion permet également de réduire la viscosité du mélange homogène qui reste pâteux et est adaptée pour un écoulement convenable dans l'extrudeuse. De plus, l'évaporation de l'eau à l'étape c) permet de générer une grande porosité dans la matière active de l'électrode, ce qui est essentiel pour l'utilisation d'électrolyte liquide au sein des accumulateurs Li-ion. Cette proportion, bien inférieure à celle utilisée dans un procédé d'enduction en voie aqueuse, limite avantageusement le temps d'évaporation lors de l'étape c) de séchage.

Selon une possibilité, le mélange homogène est obtenu en présence d'au moins 70% en poids, en particulier au moins 80% en poids, plus particulièrement au moins 90% en poids, par exemple au moins 94% en poids de matériau électrochimiquement actif, par rapport à son poids total.

Selon un mode de réalisation particulier de l'invention, le mélange homogène est destiné à une batterie ion lithium (ou LiNiₓMn_{y}Co_{z}O₂ avec x+y+z = 1) et comprend ou est constitué par un matériau électrochimiquement actif en NMC (acronyme anglosaxon pour Nickel Manganèse Cobalt, de formule LiNiₓMn_{y}Co_{z}O₂), par exemple à 96% en poids, notamment du Li(Ni_{0.6}Mn_{0.2}C_{00.2})O₂ (NMC622^{®} de la société Targray^{®} - code produit SNMC 03006), un conducteur électronique en noir de carbone, tel que du SUPER C65, notamment à 2% en poids, et un liant hydrosoluble comprenant ou étant constitué de carboxyméthyl cellulose CMC, par exemple à 2% en poids, notamment du CMC Ashland^{®} CRT 10000PA, et d'une solution aqueuse de latex, telle qu'une solution de latex SBR (acronyme anglosaxon de Styrène Butadiene Rubber). Dans cet exemple particulier, la proportion de solution aqueuse est de 11% en poids par rapport au poids total du mélange homogène extrait sec.

Dans la formule Li(Ni_{0.6}Mn_{0.2}Co_{0.2})O₂ (NMC622^{®} de la société Targray^{®}) le matériau électrochimiquement actif de NMC comprend au moins un taux de 60% de Nickel, 20% de Mn et 20% de Co. Autrement dit x =0,6, y = 0,2 et z = 0.2 dans la formule LiNiₓMn_{y}Co_{z}O₂.

Selon une disposition, le procédé de préparation de l'assemblage actif comprend après l'étape c) une étape de dépôt d) d'un second film. Ceci peut être utile dans le cas où le film microporeux a été endommagé, par exemple perforé au cours de l'étape b) de colaminage et qu'il existe un risque de court-circuit. Le second film est avantageusement un séparateur de cellule.

En variante, le procédé comprend avant l'étape d) la réalisation d'une étape e) de retrait du film microporeux., Le second film est alors déposé directement sur la matière active poreuse. Ainsi, le procédé de l'invention permet de conserver le séparateur (film microporeux) à partir de l'étape de colaminage b) jusqu'au montage de la cellule. Si celui-ci est abimé au cours du procédé, il est remplacé par un autre séparateur neuf (le second film).

Selon un second aspect, l'invention propose un assemblage actif, notamment obtenu par le procédé tel que précédemment décrit. Ledit assemblage actif comprend une bande de matière active poreuse pour électrode entre un collecteur de courant et un film microporeux. Elle présente une épaisseur comprise entre 50 micromètres et 500 micromètres, de préférence entre 200 et 500 micromètres. Ces valeurs permettent d'obtenir des électrodes de fort grammage.

En d'autres termes, ladite épaisseur comprise entre 50 micromètres et 500 micromètres, et de préférence une épaisseur comprise entre 200 et 500 micromètres, concerne l'épaisseur de la bande de matière active poreuse.

Également, et comme il ressort du présent document, la bande de matière active poreuse pour électrode est colaminée humide entre ledit collecteur de courant et ledit film microporeux dans ledit assemblage actif.

Selon une possibilité, l'assemblage actif comprend une masse surfacique de matière active poreuse comprise entre 5 et 50 mg/cm².

Il est entendu dans le présent document que l'expression « masse surfacique de la matière active poreuse » correspond au 'grammage de l'électrode'.

Selon d'autres caractéristiques, le procédé de préparation de l'invention comporte une ou plusieurs des caractéristiques optionnelles suivantes considérées seules ou en combinaison :
- La solution aqueuse est constituée d'eau déminéralisée et/ou d'eau distillée.
- Par mélange homogène il est entendu un mélange de composition homogène. Autrement dit, par mélange homogène, on entend un mélange dont la composition est identique en tout volume élémentaire du mélange.
- La température Te des deux cylindres du laminoir à l'étape b) de colaminage est de 25°C.
- La porosité de la matière active poreuse est comprise entre 20 et 40% et notamment entre 25 et 35%.
- Le conducteur électronique est choisi parmi les fibres de carbone, du noir de carbone, des nanotubes de carbone et leurs mélanges.
- Le collecteur de courant est choisi parmi un feuillard métallique ou une grille métallique. Par exemple, du cuivre, de l'aluminium, du nickel, du feutre de carbone ou de l'acier inoxydable peuvent être utilisés comme collecteur de courant pour une électrode positive ; et le cuivre ou l'acier, traité en une feuille découpée, en un métal en mousse ou une plaque de feuille laminée, par exemple, peut être utilisé comme collecteur de courant pour une électrode négative.
- La grille métallique comprend des interstices de dimensions plus importantes que celles des pores du film microporeux. De ce fait, la grille ne peut être assimilée au film microporeux / séparateur qui est de surcroit composé de pastique.
- L'élément électrochimique dans lequel est mis en œuvre l'assemblage actif selon l'invention est une électrode pour accumulateur électrochimique rechargeable, en particulier un accumulateur ou une batterie au lithium.
- Le polymère hydrosoluble comprend du carboxyméthyl cellulose et/ ou de l'acide polyacrylique.
- Le mélange homogène comprend du Carbone Dur (bien connu par l'homme de l'art sous la dénomination anglo-saxonne « hard carbon », tel que le Carbotron^{®}P (disponible chez Kureha Battery Materials Japan Co.) 97% en poids, en tant que matériau électrochimiquement actif, et du carboxyméthyl cellulose de sodium comme polymère hydrosoluble, notamment du Aqualon^{™} sodium carboxymethylcellulose disponible chez le fournisseur Ashland CRT 10000PA ou du blanose^{™} sodium carboxyméthylcellulose CMC, par exemple 3% en poids, et 65% d'extrait sec.
- Du SBR (acronyme anglophone pour Styrene Butadiene Rubber) ajouté au mélange ci-dessus permet d'améliorer son adhésion.

D'autres aspects, buts et avantages de la présente invention apparaîtront mieux à la lecture de la description suivante d'un mode de réalisation de celle-ci, donnée à titre d'exemple non limitatif et faite en référence aux figures suivantes sur lesquelles :
Figure 1 représente un schéma illustrant le procédé de préparation d'un assemblage actif selon un mode de réalisation de l'invention.
Figure 2 représente une couche de mélange homogène fournie en sortie d'une filière plate selon un mode de réalisation de l'invention.
Figure 3 représente un cordon de mélange homogène fourni en sortie d'une filière jonc selon un autre mode de réalisation de l'invention.
Figure 4 illustre les différents effets lors du colaminage avec un film microporeux selon l'invention et avec film non poreux.
Figure 5 représente une étape de retrait du film microporeux selon une variante de réalisation de l'invention.
Figure 6 représente une électrode obtenue en présence d'un film non poreux lors du colaminage selon un exemple ne faisant pas partie de l'invention.
Figure 7 représente une électrode obtenue en utilisant un film microporeux selon un mode de réalisation de l'invention.
Figure 8 représente un premier cycle de charge/ décharge d'un accumulateur Li-ion fabriqué à partir d'une électrode positive selon l'invention.
Figure 9 représente un premier cycle de charge/décharge d'un accumulateur Li-ion utilisant un séparateur neuf en remplacement du séparateur microporeux.
Figure 10 représente un premier cycle de charge/décharge d'un accumulateur li-ion fabriqué à partir d'une électrode positive enduite et un séparateur neuf.

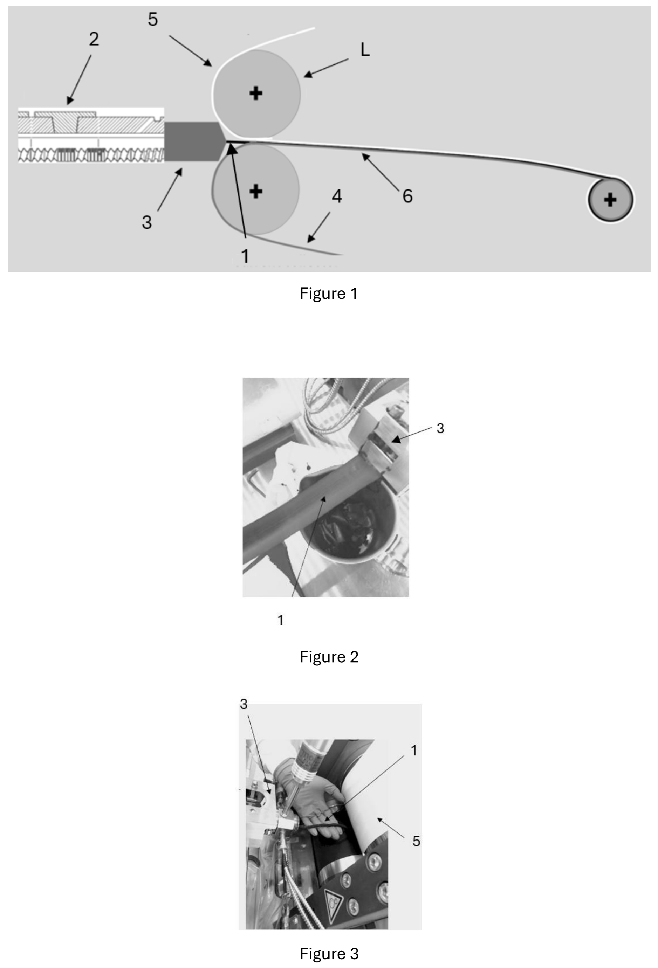

La figure 1 illustre le procédé de préparation d'un assemblage actif 100 pour électrode selon l'invention qui comprend une extrusion i) pour fournir un mélange homogène pâteux 1 (étape a), une étape b) de colaminage du mélange entre un collecteur de courant et un film microporeux suivi d'une étape c) de séchage. En tout premier lieu, afin de fournir un mélange homogène 1 à l'étape a), le procédé comprend une étape i) d'extrusion par voie aqueuse d'un mélange pâteux pour électrode comprenant au moins un matériau électrochimiquement actif. L'extrudeuse 2 considérée dans l'invention est une extrudeuse bivis co-rotative et assure l'obtention d'un mélange homogène 1 des constituants, malgré une faible quantité de solution aqueuse dans le mélange qui est donc pâteux. Représentée sur la figure 1, la sortie de l'extrudeuse 2 est munie d'une filière plate 3 optionnelle permettant une première mise forme du mélange homogène 1 sous la forme d'une couche (figure 2) avant de la fournir à l'étape a) du procédé. La couche est ensuite colaminée à l'étape b) entre un collecteur de courant 4 et un film microporeux 5 de sorte à obtenir un ensemble tricouche 6 dans lequel le mélange 1 est fortement adhéré au collecteur 4. Cet ensemble tricouche 6 est enroulé sur lui-même avant la réalisation d'une étape c) de séchage du mélange 1 de sorte à obtenir une bande 9 de matière active poreuse 7 dans l'assemblage actif 100 pour électrode. Avantageusement, le film microporeux 5 est un séparateur 8 pour électrode (membrane microporeuse), ce qui facilite la fabrication des cellules.

Cette configuration apporte un avantage supplémentaire car elle permet une meilleure cohésion du système complet (électrode négative/séparateur 8 /électrode positive), améliorant ainsi la sécurité lors de l'utilisation de la batterie. Si le retrait du séparateur 8 était tout de même nécessaire (pour densifier encore plus l'électrode par exemple ou en cas de perforation du séparateur 8 pendant le procédé), le fait qu'il soit microporeux permet de limiter l'adhésion de matière sur le séparateur 8 lors du retrait, les défauts d'inhomogénéité de l'électrode comme expliqué ci-dessous, et en conséquence des problèmes liés à une mauvaise adhésion sur le collecteur de courant 4.

Le mélange homogène 1 utilisé pour l'invention est formé par au moins un matériau électrochimiquement actif de LiNiₓMn_{y}Co_{z}O₂ avec x+y+z=1 ou NMC, une solution aqueuse, un conducteur électronique tel qu'un noir de carbone et un liant hydrosoluble, tel que du latex en solution dans la solution aqueuse. Les constituants solides du mélange sont ajoutés sous forme de poudres prémélangées et la solution de latex est diluée dans une quantité déterminée de solution aqueuse de sorte à obtenir la proportion totale souhaitée de solution aqueuse dans le mélange 1.

Selon une autre option, les constituants sont ajoutés indépendamment les uns des autres.

Dans l'exemple représenté, une filière plate 3 est combinée à l'orifice de l'extrudeuse 2, la sortie de l'extrudeuse 2 pourrait être dépourvue de filière notamment lorsque la pression est très importante et une filière jonc pourrait être utilisée à la place. Dans ce cas, le mélange homogène 1 est extrudé sous forme de jonc ou de « cordon » (figure 3).

Dans l'exemple illustré, la filière plate 3 exerce une pression sur le mélange 1 de sorte à l'aplatir sous forme de couche présentant une épaisseur d'environ 500 µm. Puis l'étape b) permet de colaminer le mélange homogène 1 sur un collecteur de courant 4 de sorte à obtenir une bande de mélange homogène 1 d'épaisseur réduite. L'épaisseur de la bande peut être affinée avec grande précision en réglant l'écartement entre les deux cylindres du laminoir L afin d'obtenir le grammage d'électrode désiré. Afin d'éviter une adhésion du mélange homogène pâteux 1 sur le deuxième cylindre, un film microporeux 5 est concomitamment introduit entre le mélange 1 et un cylindre supérieur du laminoir L de sorte à former l'ensemble tricouche 6. La présence du film microporeux 5 permet également l'élimination homogène d'une partie de la solution aqueuse à cette étape, au contraire des procédés de lamination avec un film non poreux 5' qui génère une démixtion dans la bande.

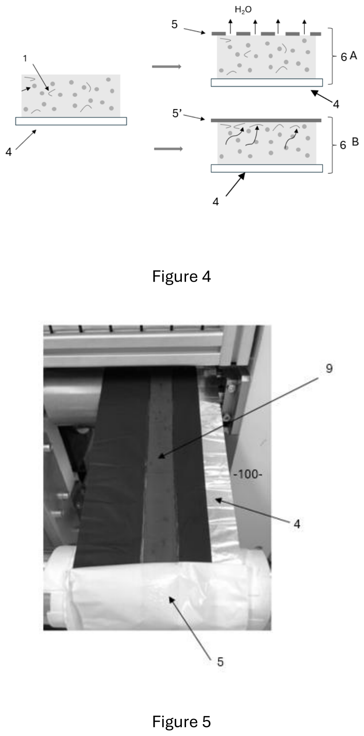

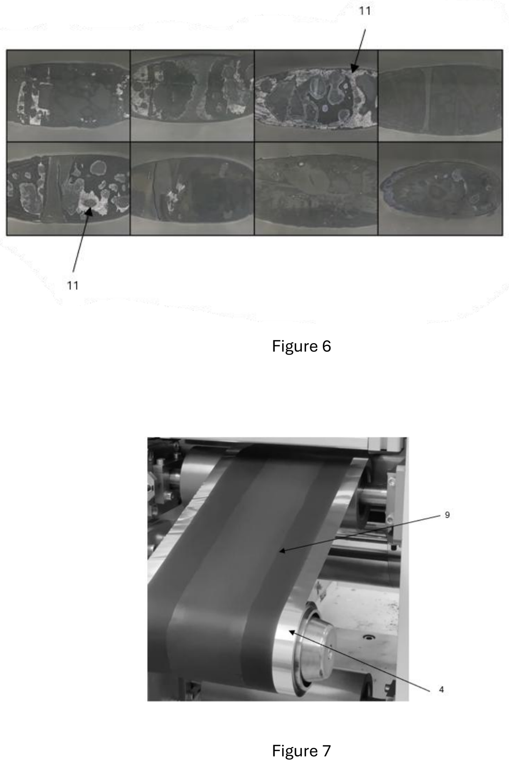

En effet, comme illustré sur la figure 4 - B, en présence d'un film antiadhésif standard non poreux, une phénomène de démixtion apparait et les constituants se regroupent sous la surface, générant ainsi des traces blanchâtres 11 que l'on peut voir à l'œil nu (se référer également en figure 6 illustrant l'électrode obtenue). L'eau s'évacue moins bien en effet du mélange homogène ce qui peut générer, des inhomogénéités dans l'épaisseur, la longueur et la largeur de la bande 9 de matière active 7. Illustré à la figure 4 - A, en présence du film microporeux 5 les constituants restent mélangés de manière homogène pendant qu'une partie de la solution aqueuse s'échappe par les micropores.

Le film microporeux 5 comprend un taux de porosité d'environ 40% et une taille moyenne de pores d'environ 0.04 µm. Le taux de porosité peut varier entre 20 et 70% environ et la taille des pores peut varier entre 0.020 micromètre et 0,070 micromètre, de sorte à permettre une élimination optimale et homogène de la solution aqueuse. Le mélange homogène 1 étant dépourvu de solvant organique, il n'est pas nécessaire de le récupérer par évaporation par exemple, ni de traiter ses vapeurs.

Le séchage de l'ensemble tricouche 6 ainsi obtenu est réalisé sous vide, notamment à une température d'environ 60°C. Le choix de la température est un compromis entre la vitesse d'évaporation de la solution aqueuse résiduelle, permettant d'obtenir la matière active poreuse 7 pour électrode, et la température de dégradation des propriétés mécaniques du séparateur 8 microporeux.

Le liant hydrosoluble utilisé peut être une solution aqueuse de latex, sa proportion dans le mélange homogène 1 est déterminée par la fluidité, le matériau électrochimiquement actif utilisé, l'épaisseur d'électrode et le grammage souhaité. Il peut entrer dans la composition jusqu'à une valeur inférieure à 10% en poids de l'extrait sec. La solution aqueuse présente une proportion variable entre 3 et 20% en poids de l'extrait sec, ici 15% environ.

Après l'étape b) de colaminage, l'ensemble tricouche 6 est enroulée avec le séparateur 8 (figure 2). On obtient ainsi une « bobine ». Celle-ci est mise à sécher pour évaporer l'eau résiduelle. A la fin du séchage, la bobine est déroulée pour obtenir l'électrode. Il est alors possible de garder le séparateur 8 pour l'utiliser dans le montage de l'accumulateur Li-ion, ou bien le séparateur 8 peut être retiré manuellement par simple traction. En effet, le séparateur 8 qui est en matériau microporeux, spécifique pour empêcher l'adhésion sur les cylindres, évite ici que de la matière active n'adhère au séparateur 8. Ensuite, avec ou sans séparateur 8, l'électrode est découpée aux dimensions souhaitées en suivant un protocole précis utilisé classiquement au laboratoire. L'accumulateur est alors monté en suivant le même protocole que celui établi au laboratoire, et un nouveau séparateur neuf 8' peut être ajouté à ce moment.

Les résultats de fonctionnement sont maintenant décrits avec un exemple particulier d'une l'électrode de NMC) à partir d'un mélange homogène 1 réalisé selon l'invention comme suit:
Dans l'extrudeuse 2 bivis corotative, sont introduits, en % massique les constituants suivants : 94% de NMC composition nominale Li(Ni_{0.6}Mn_{0.2}Co_{0.2})O₂ (disponible sous l'appellation HX12TH^{®} chez UMICORE^{®}), 3% de SUPER C65 (TIMCAL^{®}), 1% de CMC (CTR 10000PA, DOW^{®}), et 2% de LATEX (copolymère de butadiène et de styrène SBR (styrène-butadiène rubber), TRD105A, JSR, ZEON^{®})

Le polymère CMC, solubilisé dans l'eau au sein de l'extrudeuse 2, permet de conférer au mélange des propriétés rhéologiques adaptées à la technique d'extrusion. Ce polymère est également destiné à garantir à la cohésion de la matière active poreuse 7 pour l'électrode.

Le matériau électrochimiquement actif NMC mis en œuvre dans cet exemple est constitué de particules ayant un diamètre inférieur ou égal à 21 µm. Sa densité est supérieure ou égale à 4,7 g/cm3 et la surface spécifique est de 0.4 m2/g, et comme indiqué par la formule Li(Ni_{0.6}Mn_{0.2}Co_{0.2})O₂, le taux de nickel est de 60%, le taux de manganèse est de 20% et le taux de cobalt est de 20%.

Un prémélange des poudres des différents constituants est effectué avant introduction dans l'extrudeuse 2 et la solution aqueuse est introduite en aval, grâce à une pompe péristaltique. Selon une autre possibilité, les poudres peuvent également être acheminées indépendamment dans l'extrudeuse 2 grâce à des doseurs gravimétriques.

La solution de latex SBR est introduite en même temps que la solution aqueuse. La solution est préalablement diluée de sorte que l'extrait sec final du mélange soit celui attendu, ici 89%. La proportion de solution aqueuse totale est de 11% de l'extrait sec. La solution de latex permet d'apporter de l'adhésion à l'assemblage actif 100. Selon une variante de réalisation, la solution de latex pourrait également être introduite en aval de l'extrudeuse 2.

Les constituants sont mélangés dans l'extrudeuse 2 à l'aide d'éléments de mélange montés sur les deux vis cor-rotatives selon l'étape i) du procédé. Le mélange homogène 1 ainsi obtenu est poussé vers la sortie de l'extrudeuse 2 grâce à des éléments de convoyage et de transport montés sur les deux vis co-rotatives selon l'étape a).

La sortie de l'extrudeuse 2 bivis est équipée d'une filière plate 3 qui permet une première mise en forme du mélange 1 sous forme d'une couche d'une largeur 3 cm et d'une épaisseur de 500µm dans le cas présent.

La couche de mélange homogène 1 est introduite directement dans le laminoir L, entre le collecteur de courant 4 et le séparateur 8 (film microporeux 5) selon l'étape b) du procédé, de sorte à obtenir l'ensemble tricouche 6. Le séparateur 8 utilisé ici est le Celgard^{®} C2325, d'épaisseur 25µm, dont la porosité est de 39% et la taille moyenne des pores est de 0.028µm. Les cylindres du laminoir L sont thermorégulés ce qui permet d'évaporer une partie de la solution aqueuse pendant cette étape de colaminage.

Les rouleaux sont rapprochés jusqu'à atteindre l'épaisseur de l'ensemble tricouche 6 et donc le grammage d'électrode finale souhaité. Dans l'exemple décrit, ici l'épaisseur de l'ensemble tricouche 6 est de 24,45 mg/cm² avec une fente de laminage de 120 µm et une épaisseur de l'électrode = 111 micromètres (dont l'épaisseur du séparateur et 20 micromètres de collecteur de courant)

L'ensemble tricouche 6 est enroulé sur lui-même et est ensuite séché en étuve sous vide à 60°C (étape c).

Après séchage et donc après élimination de la solution aqueuse résiduelle, une bande 9 de matière active poreuse 7 est obtenue entre le collecteur de courant 4 et le séparateur 8 ce qui forme l'assemblage actif 100. Le séparateur 8 peut être conservé pour le montage de la cellule.

Par craintes d'éventuels courts-circuits, dus à de possibles perforations du séparateur 8 pendant le laminage, il est possible d'ajouter un nouveau séparateur 8' neuf après retrait de celui fourni lors du colaminage de l'étape b). Comme illustré à la figure 5, il est également possible de retirer le séparateur 8 initial pour utiliser l'électrode comme une électrode classique (fabriquée par enduction), la calandrer, la découper si besoin. Une autre possibilité consiste à retirer le séparateur 8 initial s'il a été endommagé et de le remplacer par un nouveau séparateur 8' neuf. En effet le film microporeux ou séparateur 8 en matériau spécifique qui empêche l'adhésion lors de la colamination, par exemple en plastique, permet selon la composition de la matière active 7 et l'état de surface de celle-ci, que la matière active 7 n'adhère pas au film 8. L'utilisation d'un film non poreux a été testé dans le même procédé pour identifier les différences obtenues avec un film microporeux lors des étapes b) et c) de colaminage et de séchage. Huit films non poreux différents ont été testés. Les photos des assemblages obtenus après séchage sont représentées à la figure 6.

Les surfaces des assemblages montrent des tâches blanchâtre caractéristiques des inhomogénéités dans la bande 9 de matière active poreuse 7 pour électrode : la solution aqueuse est emprisonnée entre le collecteur de courant 4 et le film non-poreux, ce qui provoque une migration du liant (latex) dans l'épaisseur de la bande 9 et la formation d'inhomogénéités comme illustré à la figure 4 - B. L'eau s'évacue moins bien en effet du mélange homogène ce qui peut générer, des inhomogénéités dans l'épaisseur, la longueur et la largeur de la matière active ce qui peut générer des défauts d'adhésion sur le collecteur 4.

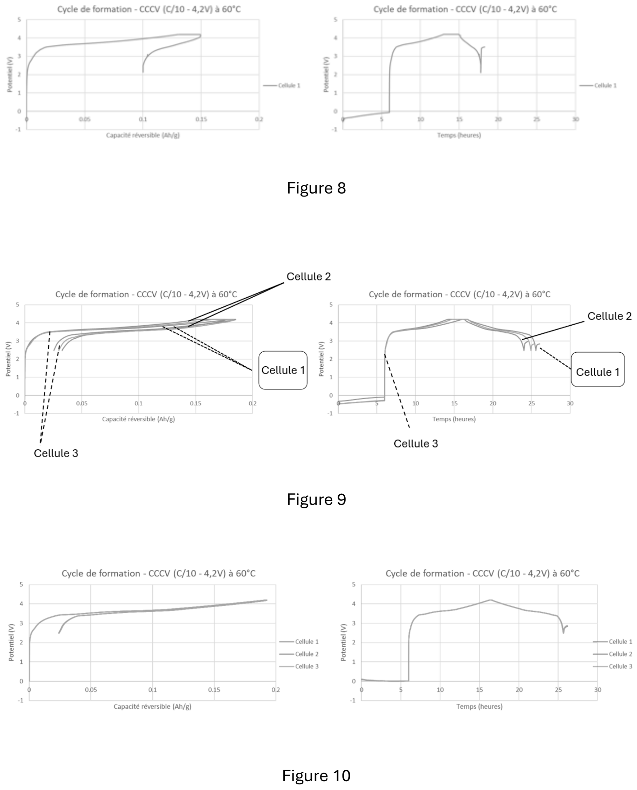

Au contraire lorsqu'un film microporeux 5 ou séparateur 8 est utilisé durant le procédé ces inhomogénéités de surface ne sont pas formées. La photo de la figure 7 illustre l'assemblage actif 100 obtenu avec l'utilisation d'un séparateur 8 microporeux. Aucune trace blanchâtre n'est visible, la surface présente une coloration homogène. Afin d'évaluer le comportement de l'électrode formée à partir de l'assemblage actif 100 selon l'invention, des cycles de formation (1er cycle de charge/décharge) ont été réalisés avec des accumulateur obtenus par différentes techniques et les résultats sont représentés aux figures 8 à 10.

Les électrodes positives des figures 8 et 9 ont été fabriquées par extrusion, tandis que les électrodes positives de la figure 10 ont été réalisées par enduction. Le séparateur 8 de la figure 8 a été utilisé comme film microporeux 5 pour le laminage, tandis que le séparateur des figures 9 et 10 a été remplacé par un nouveau séparateur 8' neuf.

Le cycle de formation de toutes ces cellules est réalisé à 60°C, avec une étape CC à C/10 suivi d'une étape de CV à 4,2V. Comme le montre les figures 8 à 10, les résultats illustrent le fait qu'il est possible de réaliser un accumulateur Li-ion avec une électrode positive extrudée en voie aqueuse et un séparateur 8 utilisé comme film microporeux 5 pendant l'étape de laminage.

Ainsi, l'invention apporte une amélioration déterminante à la technique antérieure, en fournissant un procédé de préparation d'un assemblage actif 100 pour électrode, comprenant une bande 9 de matière active poreuse 7 homogène adhérée à un collecteur de courant 4 et à un film microporeux 5, tel qu'un séparateur 8 de cellule, par une mise en œuvre simplifiée, ne nécessitant pas l'utilisation de solvant organique ni même le changement du séparateur 8 lors du montage dans la cellule.

Des électrodes présentant de bonnes performances après imprégnation par un électrolyte sont ainsi obtenues. De plus, le fait d'obtenir un séparateur 8 laminé sur la matière active poreuse 7 permet d'améliorer la sécurité de la batterie sans dégrader ses performances. En effet, le collage du séparateur 8 sur la matière active poreuse 7 de l'électrode réduit les mouvements possibles de celui-ci, notamment en cas de gonflement de la batterie ce qui limite de ce fait le risque de court-circuit.

## Revendications

1. Procédé de préparation d'un assemblage actif (100) pour électrode destinée à des éléments électrochimiques, en particulier des batteries métal-ions, le procédé comprenant les étapes suivantes :
a) fourniture d'un mélange homogène (1) comprenant au moins un matériau électrochimiquement actif et une solution aqueuse, le mélange homogène (1) étant destiné, après séchage, à former une matière active poreuse (7) pour électrode,
b) mise en forme du mélange homogène (1) par colaminage entre un collecteur de courant (4) et un film microporeux (5) de sorte à former un ensemble tricouche (6) comprenant le mélange homogène (1) laminé sous forme d'une bande, dont une première face est assemblée au collecteur de courant (4) et dont une seconde face opposée est assemblée au film microporeux (5), le colaminage réduisant en partie la quantité de solution aqueuse présente dans le mélange homogène (1),
c) séchage de l'ensemble tricouche (6) de sorte à évaporer la solution aqueuse résiduelle et obtenir un assemblage actif (100) comprenant une bande (9) de matière active poreuse (7) entre le collecteur de courant (4) et le film microporeux (5).

2. Procédé selon la revendication 1, lequel comprend avant l'étape a) de fourniture du mélange homogène (1), la réalisation d'une étape i) d'extrusion par voie aqueuse de constituants comprenant au moins le matériau électrochimiquement actif, un conducteur électronique, un liant hydrosoluble et une solution aqueuse, de sorte à fournir le mélange homogène (1) à l'étape a).

3. Procédé selon l'une des revendications précédentes dans lequel le film microporeux (5) comprend un taux de porosité compris entre 20 et 70%, notamment entre 30 et 60%.

4. Procédé selon l'une des revendications précédentes dans lequel les pores du film microporeux (5) présentent un diamètre moyen compris entre 0,020 micromètres et 0,070 micromètres, notamment entre 0,025 et 0,050 micromètres.

5. Procédé selon l'une des revendications précédentes, dans lequel le film microporeux (5) est constitué par une membrane microporeuse (8) destinée à séparer la cathode et l'anode de cellule dans les batteries, la membrane microporeuse étant perméable aux ions de l'électrolyte de la cellule.

6. Procédé selon l'une des revendications 2 à 5, dans lequel le liant hydrosoluble du mélange homogène (1) est constitué d'un ou plusieurs polymères hydrosolubles présent(s) dans une proportion comprise entre 0,5% en poids et une valeur strictement inférieure à 10% en poids par rapport au poids total des constituants entrant dans la composition de la matière active poreuse (7) d'électrode à l'état sec.

7. Procédé selon l'une des revendications précédentes, dans lequel la proportion de solution aqueuse dans le mélange homogène (1) de l'étape a) est comprise entre 3 % et 20% en poids par rapport au poids total du mélange homogène (1) extrait sec, et par exemple entre 5 et 15% en poids.

8. Procédé selon l'une de revendications précédentes, dans lequel le mélange homogène (1) est destiné à une batterie au lithium ion et comprend un matériau électrochimiquement actif en NMC, un conducteur électronique en noir de carbone, et un liant hydrosoluble comprenant du carboxyméthyl cellulose (CMC) et une solution aqueuse de latex.

9. Assemblage actif (100) pour électrode, notamment obtenu par le procédé selon l'une des revendications 1 à 8, lequel comprend une bande (9) de matière active poreuse (7) pour électrode, colaminée humide entre un collecteur de courant (4) et un film microporeux (5), la bande (9) présentant une épaisseur comprise entre 50 micromètres et 500 micromètres, de préférence une épaisseur comprise entre 200 et 500 micromètres.

10. Assemblage actif (100) selon la revendication 9, lequel comprend une masse surfacique de matière active poreuse (7) comprise entre 5 et 50 mg/cm².

11. Assemblage actif (100) selon la revendication 9 ou 10, dans lequel la porosité de la matière active poreuse (7) est comprise entre 20 et 40%, et notamment entre 25 et 35%.
